# EUROPÄISCHE PATENTSCHRIFT

(11) **EP 0 911 755 B1**
(45) Veröffentlichungstag und Bekanntmachung des Hinweises auf die Patenterteilung: **02.05.2007**
(21) Anmeldenummer: 98119788.2
(22) Anmeldetag: 22.10.1998
(51) Int. Cl.: G06K 19/04, D06F 93/00

(54) **Vorrichtung zur maschinenlesbaren Kennzeichnung von Textilien**
Device for machine readable characterization of textiles
Dispositif de caractérisation de textiles d'une façon lisible par machine

(30) Priorität: 24.10.1997 DE 19747152
(43) Veröffentlichungstag der Anmeldung: 28.04.1999
(73) Patentinhaber: BSH Bosch und Siemens Hausgeräte GmbH, 81739 München (DE)
(72) Erfinder: Wöbkemeier, Martina, Dr.-Ing., 10789 Berlin (DE)

(56) Entgegenhaltungen:
- EP-A- 0 624 312
- EP-A- 0 680 012
- DE-A- 4 137 819
- DE-A- 4 229 862
- DE-A- 4 309 914
- DE-A- 4 341 880
- DE-A- 19 520 326
- DE-A- 19 753 619

## Beschreibung

Die vorliegende Erfindung betrifft eine Vorrichtung zur maschinenlesbaren Kennzeichnung von Textilien mit einem dem zu kennzeichnenden Textilstück zugeordneten, passiven Kennzeichenträger, der äußere Merkmale aufweist, welche im Kennzeichenträger gespeicherte Informationen über Art, Beschaffenheit, Form, Farbe und/oder Größe des Textilstückes wiedergeben, für die Behandlung von Textilien durch Haushaltgeräte.

Transponder sind passive elektronische Einrichtungen, die unter Einwirkung von bestimmten elektromagnetischen Sendesignalen ansprechen und das Sendesignal frequenzspezifisch belasten oder in frequenzspezifischer Weise auf das Sendesignal mit einem eigenen Antwortsignal antworten. Dabei übertragen sie dieses als gespeicherte Informationen geformte Spezifikum auf Empfänger, die im allgemeinen Bestandteil der Sendeeinrichtung sind.

Transponder werden bereits verwendet, um Textilien maschinenlesbar zu kennzeichnen. Dies findet jedoch bei der Automatisierung ihrer Fertigung Anwendung. Hierbei werden die Transponder als kleiner fester Gegenstand vorübergehend an den Textilien befestigt und führen die innerbetriebliche Logistik, damit die Textilien auf ihrem Weg durch die Fertigung immer an die gerade zutreffenden Bearbeitungsstationen gefördert werden.

Durch EP 0 680 012 A2 sind Etiketten zur Kennzeichnung auch von Textilien bekannt. Diese Etiketten sind ein als Kennzeichnungseinrichtung bezeichnetes Bauteil mit einem Sende-Empfangsgerät als integraler Bestandteil. Dabei handelt es sich um eine aktive Kennzeichnungseinrichtung, die einen Speicher, einen Verbinder, eine Steuereinrichtung, eine Anzeigeeinrichtung, ein Sende-Empfangsgerät mit nicht näher bezeichneter Antenne und - vor allem; deshalb ist sie aktiv - eine eigene Stromversorgung enthält. Diese Kennzeichnungseinrichtung kann in flexibler Schaltkreistechnik aufgebaut und damit für die Anbringung an Textilien geeignet sein.

Eine solche Kennzeichnungseinrichtung sendet selbständig und autark ständig Informationen aus, die von einer lokalen Sende-Empfangsstation empfangen werden können, wenn das mit der Kennzeichnungseinrichtung versehene Textil an der entsprechenden Station einer Waschmaschine auch noch in einiger Entfernung vorbei bewegt wird. Wegen ihrer autarken und mit eigener Stromversorgung ausgestatteten Natur ist diese Kennzeichnungseinrichtung als Kennzeichenträger für die Behandlung von Textilien durch Haushaltgeräte, in dem elektrisch lesbare Informationen über das Textilstück gespeichert sind, nicht geeignet.

Eine Vorrichtung der eingangs genannten Art ist aus DE 43 09 914 A1 bekannt. Anspruch 1 ist gegen dieses Dokument abgegrenzt. Die Vorrichtung sieht vor, Textilien mit einem Etikett mit computerlesbaren bzw. computerverarbeitbaren Daten zu versehen. Solche Wäsche-Etiketten sind auch mit elektrisch oder optisch ablesbaren Code-Elementen zur codierten Darstellung der einzelnen Daten versehen. Als Art der Codierung können Wäschepflegesymbole dienen oder die Codierung kann vorzugsweise als Bar-Code-Beschriftung ausgeführt werden. Solche Textilerkennungs-Etiketten können nachträglich vom Verbraucher selbst an den Wäschestücken angebracht werden. DE 43 09 914 A1 enthält keinen Hinweis auf eine besonders bevorzugte Auswahl aus einer Vielzahl von elektrisch ablesbaren Code-Elementen. Außerdem ist nicht ersichtlich, wie eine solche Auswahl zu treffen ist, da doch keine äußeren Merkmale an einem Transponder erkennbar sind, aufgrund derer gerade diese Auswahl getroffen werden könnte.

Wenn der Kunde im Haushalt vorhandene Wäschestücke nachträglich mit Transpondern versehen will, die zur Kennzeichnung von Wäschestücken dienen können, liegt eine Schwierigkeit in der Tatsache, dass der Transponder als kleines elektronisches Bauteil bei einfacher Betrachtung keinerlei Aufschluss über die in ihm gespeicherten Informationen gibt. Elektronische Schaltkreise sind - wenn überhaupt - mit sehr speziellen kurzen Bezeichnungen gezeichnet, die höchstens dem Fachmann etwas bedeuten, jedoch für einen Endgebraucher als Nichtfachmann keinerlei Aussagekraft besitzen. Außerdem ist das Auslesen der in einem Transponder gespeicherten Information auch nur mit einem elektronischen Gerät möglich

WO 96/41296 (zitiert in der EP-A-991 010) offenbart ebenfalls die Kennzeichung von Wäschestücken mit Transpondern.

Auch EP 0 624 312 A1, aus der ein Identifikationssytem zur Kennzeichnung von Tieren oder Gegenständen bekannt ist, kann hierüber keinen Aufschluss geben, wenn auch zur Kennzeichnung von Gegenständen durchaus die Anwendung von Transpondern empfohlen wird. EP 0 624 312 A1 empfiehlt zur Auswahl von Transpondern, die nachträglich an Gegenständen angebracht werden sollen, als Auswahlkriterien die Anbringung von externen Kennzeichen in Form von Bedruckungen oder Prägungen. Diese Form der externen Kennzeichnung ist für Benutzer unter Umständen schwer interpretierbar; denn sie müsste sich bei der geringen Größe von für Textilstücke benutzbaren Transpondern auf sehr kleine Flächen beschränken, auf denen nicht genügend Platz ist für Erläuterungen.

Eine ähnliche Schwierigkeit besteht bei Transpondern gemäß DE 43 41 880 A1, die in Form von Chip-Karten mit einer Farbe gekennzeichnet sein können, die für Eingeweihte erkennbar machen soll, welche Herstellungskenndaten einem mit dem Transponder versehenen Kleidungsstück eigen sind.

Markierungsvorrichtungen sind auch aus DE 37 07 344 A1, DE 41 32 158 A1, DE 41 37 819 A1, DE 42 29 862 A1 und FR 2 708 580 bekannt.

Der vorliegenden Erfindung liegt die Aufgabe zugrunde, Transponder für die maschinenlesbare Kennzeichnung von Textilien zur automatischen Eingabe von geeigneten Behandlungsschritten an Haushaltgeräten so auszubilden, dass eine einfache und sichere Auswahl des zutreffenden Transponders durch einen mit der Wäschebehandlung im Haushalt befassten Kunden ermöglicht wird.

Erfindungsgemäß ist der Kennzeichenträger ein Transponder und sind seine äußere Beschaffenheit, Form, Farbe und/oder Größe für den Laien erkennbare Merkmale, die den jeweiligen Merkmalen des gekennzeichneten Textilstückes entsprechen. Auf diese Weise ist es einem Laien auch ohne ein elektronisches Lesegerät möglich, den für die Kennzeichnung eines bestimmten Textilstückes geeigneten Transponder auszuwählen oder eine bereits erfolgte Auswahl zu überprüfen.

Gespeichert werden können Daten zum Textilstück an sich, wie Farbe, Gewebeart, Gewicht, Temperaturfestigkeit oder auch Hinweise zu seiner Behandlungsweise wie Waschtemperatur oder -dauer, Waschmechanik oder Schleuderfestigkeit. Die gespeicherten Informationen betreffen insbesondere die für den beabsichtigten Behandlungsvorgang zutreffenden Daten dieses Textilstückes.

So kann die Größe des Transponders die im Transponder gespeicherte Information über die Größe des zu kennzeichnenden Textilstücks wiedergeben. Beispielsweise kann eine kleine Baugröße des Transponders zum Ausdruck bringen, dass in ihm die Information "Baby-" oder "Kinderwäsche" gespeichert ist.

Auch ist es möglich, dass die Farbe des Transponders die im Transponder gespeicherte Farbinformationen über das zu kennzeichnende Textilstück wiedergibt, die in ihm gespeichert sind. Insbesondere kann die Transponderfarbe gespeicherte Farbinformationen anzeigen. So kann ein Transponder, der als Information den Farbton des Textilstückes trägt, auch in dieser Farbe gehalten sein.

Ferner kann auch die Form des Transponders die im Transponder gespeicherten Informationen über die allgemeine Art oder Form des Textilstückes wiedergeben. Beispielsweise kann der Transponder für ein Hemd auch tatsächlich annähernd in Hemdform ausgebildet sein, so dass direkt eine Zuordnung des Transponders zur Wäscheart möglich ist. Oder aber die Form des Transponders ist aus einer Reihe von Formen ausgewählt, die zwar nicht direkt Aufschluss über die gespeicherte Informationen geben aber über eine separat vereinbarte Zuordnung bestimmten Daten entsprechen.

Auch kann die Oberflächenbeschaffenheit die im Transponder gespeicherte Information über die Beschaffenheit des Textilstücks wiedergeben. So kann eine besonders glatte Oberfläche einer sorgsam zu behandelnden Wäsche entsprechen und eine rauhe Oberfläche die Information über eine grobe Textilart geben.

Weiterhin kann auch das Gewicht des Transponders oder dessen Verhältnis von Gewicht zu Volumen dazu benutzt werden, um auf diesem Weg gespeicherte Informationen anzuzeigen beziehungsweise dem Benutzer zu vermitteln. Ein Transponder mit einem auf sein Volumen bezogen hohen Gewicht kann zum Ausdruck bringen, dass die Information "schwere Textilart" gespeichert ist.

Für all die vorgenannten Merkmale, die zur Anzeige von im Transponder gespeicherten Informationen verwendet werden können, gilt, dass sie nicht nur zur Anzeige von gleichartigen oder ähnlichen Merkmalen verwendet werden können. So ist es beispielsweise auch möglich, dass die Farbe eines Transponders nicht die Farbe des Textilstückes sondern die Gewebeart zum Ausdruck bringt oder ob ein Textilstück geschleudert werden darf.

Weitere Einzelheiten, Merkmale und Vorteile der vorliegenden Erfindung ergeben sich aus der nachfolgenden Beschreibung einer bevorzugten Ausführungsform unter Bezugnahme auf die Zeichnungen.

Darin zeigen
- Fig. 1: eine Vorderansicht des zu kennzeichnendenTextilstückes, und
- Fig. 2: eine perspektivische Ansicht eines erfindungsgemäßen Transponders.

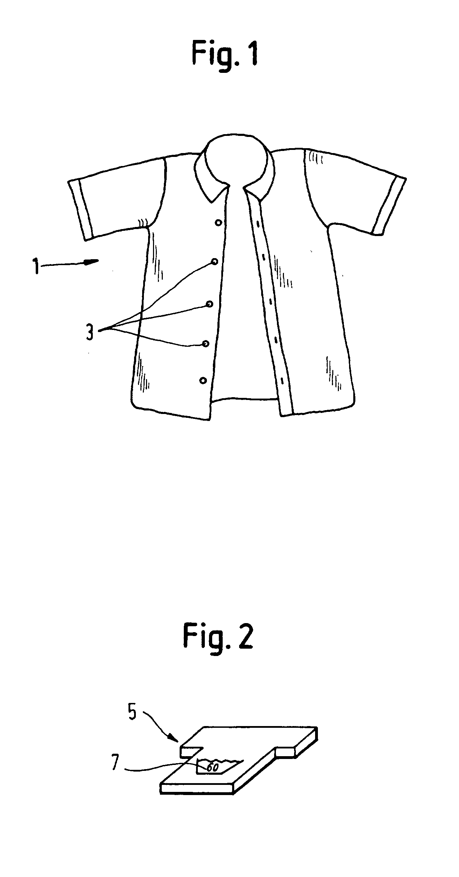

In Fig. 1 ist das zu kennzeichnende Textilstück 1 abgebildet, es handelt sich um ein weißes Hemd 1 aus Baumwolle. Das Hemd 1 weist zudem vorn in einer Reihe angeordnete Knöpfe 3 auf.

Zur Kennzeichnung dieses Hemdes 1 wird ein Transponder 5 verwendet, der in Fig. 2 dargestellt ist. Der Transponder 5 hat die Gestalt eines flachen Plättchens und ist allgemein T-förmig. Seine Farbe ist weiß.

Zusätzlich weist der Transponder 5 ein Kennzeichen 7 in Form eines symbolischen Waschzubers mit einer in der Mitte abgebildeten Zahl 60 auf, wie es bereits auf den herkömmlichen Textilpflegekennzeichen üblicherweise verwendet wird.

Die verschiedenen Merkmale des Transponders 5 bringen folgende, im Transponder 5 gespeicherte Informationen über das Textilstück 1 zum Ausdruck:

| | |
|---|---|
| T-Form : | Hemd |
| Farbe weiß: | Weißes Textilstück |
| Kennzeichen (7): | nicht über 60 Grad Celsius waschen |

Die im Transponder 5 gespeicherten Informationen sind so, insbesondere für einen Endgebraucher, leicht erkennbar. Der Transponder 5 kann am Hemd 1 auf geeignete Weise befestigt werden. Dazu wird er an einer unauffälligen Stelle des Hemdes 1 eingenäht.

Somit wird durch die erfindungsgemäße Lösung eine Vorrichtung zur Kennzeichnung eines Textilstückes mit einem Transponder geschaffen, wobei die äußeren Merkmale des Transponders diejenigen Informationen zumindest teilweise anzeigen, die in ihm gespeichert sind, so daß eine besonders einfache und sichere Auswahl des für die Kennzeichnung eines Textilstückes zutreffenden Transponders insbesondere für den Laien möglich ist.

## Patentansprüche

1. Vorrichtung zur maschinenlesbaren Kennzeichnung von Textilien mit einem dem zu kennzeichnenden Textilstück zugeordneten, passiven Kennzeichenträger, der äußere Merkmale aufweist, welche im Kennzeichenträger gespeicherte Informationen über Art, Beschaffenheit, Form, Farbe und/oder Größe des Textilstückes (1) wiedergeben, für die Behandlung von Textilien durch Haushaltgeräte, **dadurch gekennzeichnet, dass** der Kennzeichenträger ein passiver Transponder (5) ist und seine äußere Beschaffenheit, Form, Farbe und/oder Größe für den Laien erkennbare Merkmale sind, die den jeweiligen Merkmalen des **gekennzeichneten** Textilstückes (1) entsprechen.

2. Vorrichtung nach Anspruch 1, **dadurch gekennzeichnet, dass** die Größe des Transponders (5) die im Transponder gespeicherte Information über die Größe des zu kennzeichnenden Textilstücks (1), wiedergibt.

3. Vorrichtung nach einem der Ansprüche 1 oder 2, **dadurch gekennzeichnet, dass** die Farbe des Transponders (5) die im Transponder gespeicherte Farbinformation über das zu kennzeichnende Textilstück (1) wiedergibt.

4. Vorrichtung nach einem der Ansprüche 1 bis 3, **dadurch gekennzeichnet, dass** die Form des Transponders (5) die im Transponder gespeicherte Information über die allgemeine Art oder Form des Textilstückes (1) wiedergibt.

5. Vorrichtung nach einem der Ansprüche 1 bis 4, **dadurch gekennzeichnet, dass** die Oberflächenbeschaffenheit des Transponders (5) die im Transponder gespeicherte Information über die Beschaffenheit des Textilstücks (1) wiedergibt.

6. Vorrichtung nach einem der Ansprüche 1 bis 5, **dadurch gekennzeichnet, dass** das Verhältnis von Transpondergewicht zu Größe oder Volumen des Transponders (5) die in ihm gespeicherte Information über das Gewicht des betreffenden Textilstücks (1) wiedergibt.

## Claims

1. Device for machine-readable marking of textiles with a passive marking carrier, which is associated with the textile article to be marked and which has external features reproducing data, which are stored in the marking carrier, with respect to kind, property, shape, colour and/or size of the textile article (1), for treatment of textiles by domestic appliances, **characterised in that** the marking carrier is a passive transponder (5) and its external property, shape, colour and/or size are features which are recognisable by laymen and which correspond with the respective features of the marked textile article (1).

2. Device according to claim 1, **characterised in that** the size of the transponder (5) reproduces the information, which is stored in the transponder, with respect to the size of the textile article (1) to be marked.

3. Device according to one of claims 1 and 2, **characterised in that** the colour of the transponder (5) reproduces the colour information, which is stored in the transponder, with respect to the textile article (1) to be marked.

4. Device according to one of claims 1 to 3, **characterised in that** the shape of the transponder (5) reproduces the information, which is stored in the transponder, with respect to the general kind or shape of the textile article (1).

5. Device according to one of claims 1 to 4, **characterised in that** the surface property of the transponder (5) reproduces the information, which is stored in the transponder, with respect to the property of the textile article (1).

6. Device according to one of claims 1 to 5, **characterised in that** the ratio of transponder weight to size or volume of the transponder (5) reproduces the information, which is stored therein, with respect to the weight of the textile article (1) concerned.

## Revendications

1. Dispositif de marquage de textiles sous forme lisible par machine avec un support de marquage passif affecté à la pièce textile à marquer, lequel support présente des caractéristiques extérieures qui reproduisent des informations stockées sur le support de marquage concernant l'espèce, la qualité, la forme, la couleur et/ou la taille de la pièce textile (1), aux fins du traitement de textiles par des appareils ménagers, **caractérisé en ce que** le support de marquage est un transpondeur passif (5) et sa qualité, sa forme, sa couleur et/ou sa taille extérieures sont des caractéristiques reconnaissables pour le non-professionnel, lesquelles correspondent aux caractéristiques respectives de la pièce textile (1) marquée.

2. Dispositif selon la revendication 1, **caractérisé en ce que** la taille du transpondeur (5) reproduit l'information, stockée dans le transpondeur, sur la taille de la pièce textile (1) à marquer.

3. Dispositif selon l'une des revendications 1 ou 2, **caractérisé en ce que** la couleur du transpondeur (5) reproduit l'information de couleur, stockée dans le transpondeur, concernant la pièce textile (1) à marquer.

4. Dispositif selon l'une des revendications 1 à 3, **caractérisé en ce que** la forme du transpondeur (5) reproduit l'information, stockée dans le transpondeur, sur l'espèce ou la forme générales de la pièce textile (1).

5. Dispositif selon l'une des revendications 1 à 4, **caractérisé en ce que** la qualité de surface du transpondeur (5) reproduit l'information, stockée dans le transpondeur, sur la qualité de la pièce textile (1).

6. Dispositif selon l'une des revendications 1 à 5, **caractérisé en ce que** le rapport entre le poids du transpondeur et la taille ou le volume du transpondeur (5) reproduit l'information, stockée dedans, sur le poids de la pièce textile (1) concernée.
